Europäisches Patentamt

European Patent Office

Office européen des brevets

(11) Veröffentlichungsnummer : **0 041 925**
**B1**

(12) **EUROPÄISCHE PATENTSCHRIFT**

(45) Veröffentlichungstag der Patentschrift :
**15.08.84**

(21) Anmeldenummer : **81810220.4**

(22) Anmeldetag : **05.06.81**

(51) Int. Cl.³ : **F 16 H  3/36**, F 16 H  3/38// **F16H37/02**

(54) Schaltgetriebe an einem Nutzfahrzeug.

(30) Priorität : **06.06.80 CH 4375/80**

(43) Veröffentlichungstag der Anmeldung :
**16.12.81 Patentblatt 81/50**

(45) Bekanntmachung des Hinweises auf die Patenterteilung : **15.08.84 Patentblatt 84/33**

(84) Benannte Vertragsstaaten :
**AT BE DE FR GB IT LU NL SE**

(56) Entgegenhaltungen :
**EP-A- 0 004 412**
**CH-A-   111 842**
**DE-C-   186 422**
**FR-A-   380 664**
**GB-A-   216 544**
**US-A- 1 338 974**
**US-A- 1 453 478**
**US-A- 1 471 162**
**US-A- 1 528 574**
**US-A- 1 817 819**
**US-A- 3 702 571**

(73) Patentinhaber : **Wüthrich, Hansrudolf**
**Ettenhauserstrasse 58**
**CH-8620 Wetzikon (CH)**

(72) Erfinder : **Wüthrich, Hansrudolf**
**Ettenhauserstrasse 58**
**CH-8620 Wetzikon (CH)**

(74) Vertreter : **Steiner, Martin et al**
**c/o AMMANN PATENTANWAELTE AG BERN**
**Schwarztorstrasse 31**
**CH-3001 Bern (CH)**

## Beschreibung

Die vorliegende Erfindung betrifft ein Schaltgetriebe an einem Nutzfahrzeug, insbesondere Traktor. Bekannte Getriebe dieser Art sind verhältnismässig umständlich in Aufbau, Bedienung und Wartung, indem beispielsweise abgesehen von einem üblichen Schaltgetriebe noch ein Nachschaltgetriebe vorgesehen ist (Sonderdruck aus « Lastauto/Omnibus », Heft 5/1967). Das Schalten eines solchen Getriebes ist verhältnismässig umständlich. Das Getriebe weist nicht nur einen grossen Aufwand an Einzelteilen auf, sondern die Anzahl von ständig mitlaufenden und somit energieverbrauchenden Zahnrädern ist erheblich, und der für Nutzfahrzeuge wesentliche Zapfwellenantrieb erfolgt in ebenfalls unwirtschaftlicher Weise über die beiden vorhandenen Getriebe. Die Haupt- und Vorgelegewellen der Getriebe sind übereinander angeordnet, was die Wartung erschwert und einen relativ hohen Aufbau und somit hohen Schwerpunkt des Getriebes und des Fahrzeuges ergibt. Die Synchronisation bedingt einen hohen Aufwand an Einzelteilen, Gewicht und Raum.

Es sind auch Getriebe mit einem starren Satz von Zahnrädern mit abgestuftem Durchmesser bekannt, bei welchen in die Zahnräder ein über eine Vorgelegewelle antreibbares Vorgelegerad wahlweise einrückbar ist (FR-A-380 664). Solche Getriebe sind zwar einfach im Aufbau, lassen jedoch das Problem der für moderne Getriebe geforderten Synchronisation offen.

Es ist das Ziel vorliegender Erfindung, ausgehend von einem Getriebe der letztgenannten Art, ein Getriebe für Nutzfahrzeuge, insbesondere Traktoren, zu schaffen, welches bei geringem Aufwand eine gute Synchronisation und optimale Antriebsmöglichkeiten bietet. Dieses Ziel wird durch die Massnahmen nach dem Kennzeichen des Anspruchs 1 erreicht. Die Parallelschaltung des Schaltgetriebes und des stufenlos verstellbaren Getriebes erlaubt nicht nur, über den ganzen vielstufigen Schaltbereich die Synchronisation sicherzustellen, sondern über das stufenlose Getriebe kann z. B. im Kriechgang die ganze Antriebsenergie elastisch übertragen und dabei die Geschwindigkeit problemlos geregelt werden. Während des Schaltvorganges kann über das stufenlose Getriebe ein gewisses Restmoment übertragen werden, was nicht nur die Synchronisation bewirkt, sondern die Geschwindigkeit des Fahrzeuges aufrechterhält, bzw. weniger abfallen lässt. Da der Satz von Zahnrädern keine Synchronisationssätze aufweist, kann die diesen Satz tragende Welle als von einer Zentralwelle durchsetzte Hohlwelle ausgeführt sein, ohne dass sich dadurch untragbar grosse Durchmesser für die Getriebeteile ergeben. Ueber die Zentralwelle können Hilfsaggregate, wie z. B. eine Hydraulikpumpe, angetrieben und daher an günstiger Stelle angebracht werden.

Die Erfindung wird nun anhand eines in der Zeichnung dargestellten Ausführungsbeispiels näher erläutert.

Figur 1 zeigt ein Gesamtschema des Getriebes,

Figur 2 zeigt eine schematische Stirnansicht eines Getriebeteils, und

Figur 3 zeigt eine Positionierungsvorrichtung für den umschaltbaren Getriebeteil.

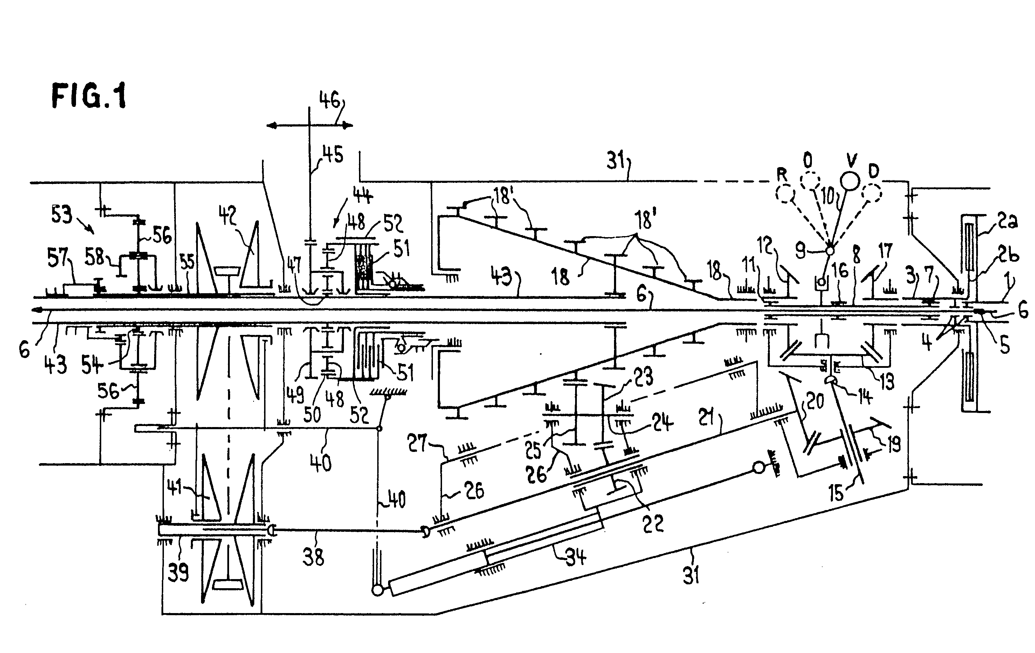

In Figur 1 ist das Ende der Motorwelle 1 dargestellt, mit welchem der eine Teil 2a einer Kupplung verbunden ist ; der andere Teil 2b der Kupplung ist mit einer Hohlwelle 3 verbunden. Die Wellen 1 und 3 weisen je einen gleichartigen Innenprofilteil 4 auf, mit welchen ein Aussenprofilteil 5 einer zentralen Zapfwelle 6 durch entsprechende Axialverschiebung dieser Zapfwelle wahlweise gekuppelt werden kann. Mit der Hohlwelle 3 ist längsverschiebbar, aber mittels eines Profilteils 7 unverdrehbar eine hohle Schaltwelle 8 gekuppelt. Wie in Figur 1 angedeutet, greift an dieser Schaltwelle der bei 9 gelagerte Schalthebel 10 an, mit welchem die Schaltwelle verschoben werden kann. Bei der dargestellten Stellung des Schalthebels 10, bzw. der Schaltwelle 8 ist der Vorwärtsgang eingeschaltet, was mit der Bezeichnung V angedeutet ist. In diesem Falle steht ein Profilteil 11 der Schaltwelle 8 im Eingriff mit der Nabe eines Kegelrades 12, über welches ein Kegelrad 13 und über ein Kardangelenk 14 eine Hilfswelle 15 im Sinne des Vorwärtsganges angetrieben wird. Wird der Schalthebel 10 in die mit R bezeichnete Rückwärtsstellung verschoben, gelangt ein zweites Profilteil 16 der Schaltwelle 8 in Eingriff mit der Nabe eines Kegelrades 17, während der Profilteil 11 ausser Eingriff mit dem Kegelrad 12 gelangt. Ueber das Kegelrad 17 und das Kegelrad 13 wird dann die Welle 15 im Sinne des Rückwärtsganges angetrieben. Dazwischen befindet sich eine neutrale, in Figur 1 mit 0 bezeichnete Stellung des Schalthebels, bzw. der Schaltwelle 8, in welcher Stellung die Drehung der Schaltwelle 8 nicht auf die Welle 15 übertragen wird. Eine weitere mit D bezeichnete Stellung des Schalthebels 10 entspricht einer hinteren Extremstellung der Schaltwelle 8, in welcher der Profilteil 11 mit dem vorderen Ende eines noch zu beschreibenden kegelförmigen Stufenradsatzes 18 in Eingriff steht und damit die Motordrehung direkt an diesen Radsatz überträgt. Für diese Stellung erfolgt ebenfalls kein direkter Antrieb von der Schaltwelle 8 an die Hilfswelle 15.

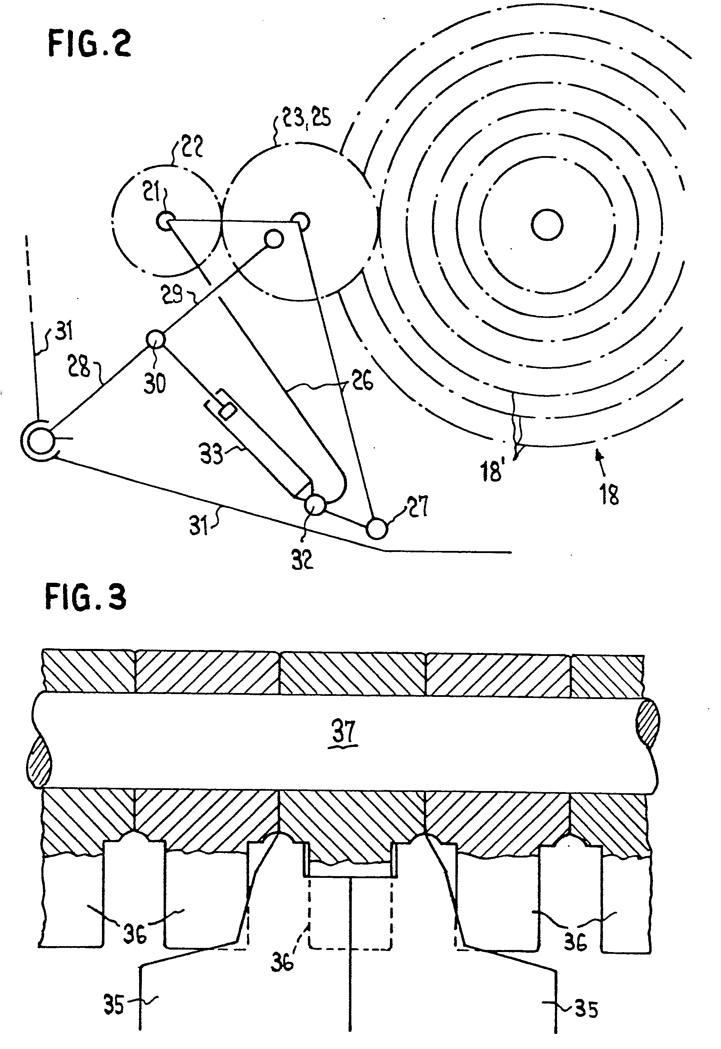

Auf der Hilfswelle 15 sitzt axial verschiebbar aber unverdrehbar ein Kegelrad 19, das mit einem Kegelrad 20 auf einer Vorgelegewelle 21 kämmt. Auf der Vorgelegewelle 21 sitzt axial verschiebbar, aber mit der Vorgelegewelle unverdrehbar gekuppelt, ein Kegelrad 22, das mit einem Kegelrad 23 auf einer weiteren Vorgelegewelle 24 kämmt. Ein Stirnrad 25 der Vorgelegewelle 24 kann wahlweise mit verschiedenen Rädern 18' des Radsatzes 18 gekuppelt werden. Die Wellen 21 und 24 sind in einem Gestell 26 gelagert, das auch in Figur 2 angedeutet ist, und das um eine Schwenkachse 27 geschwenkt werden kann. Die Schwenkstellung des Gestells 26 ist bestimmt durch einen Kniegelenkhebel, dessen Arme 28 und 29 durch das Gelenk 30 verbunden sind und von welchen der eine schwenkbar am Gestell 26 und der andere schwenkbar an dem in den Figuren 1 und 2 angedeuteten Getriebegehäuse oder Getriebegestell 31 angreift. Zwischen dem Kniehebelgelenk 30 und einem weiteren Gelenk 32 am Gestell 26 greift ein hydraulischer Betätigungszylinder 33 an. Er dient dazu, beim Schaltvorgang das Kniehebelgelenk 28, 29 einzuknicken, wodurch das Gestell 26 um seine Schwenkachse 27 nach aussen geschwenkt und das Zahnrad 25 aus dem Zahnrad 18′ des Radsatzes 18 ausgerückt wird. Die Vorgelegewelle 21 steht praktisch parallel zur Mantellinie des Radsatzes 18. Am Gestell 26 greift ein weiterer hydraulischer Betätigungszylinder 34 an, welcher dieses Gestell in Achsrichtung der Vorgelegewelle 21 zu verschieben gestattet. Am Gestell 26 ist gemäss Figur 3 eine Positionierungsgabel 35 angebracht, welche in verschiedenen Positionen mit Anschlagnocken 36 einer fest im Getriebegehäuse 31 angeordneten, in Figur 1 nicht dargestellten Anschlagwelle 37 in Eingriff gebracht werden kann, um die Schaltstellung des Gestells 26, bzw. des Zahnrads 25 im Eingriff mit einem Zahnrad 18′ des Radsatzes 18 eindeutig zu bestimmen.

Die Vorgelegewelle 21 ist über eine Kardanwelle 38 mit der einen Welle 39 eines stufenlosen Zahnriemengetriebes verbunden. Die Schaltstellungen des Gestells 26, bzw. des Zylinders 34 werden über ein Gestänge 40 auf Scheiben 41, bzw. 42 des stufenlosen Zahnriemengetriebes übertragen. Das Uebersetzungsverhältnis des stufenlosen Zahnriemengetriebes wird damit jeweils automatisch dem Uebersetzungsverhältnis im eigentlichen Schaltgetriebe, also zwischen der Schaltwelle 8 und dem Radsatz 18, angepasst.

Der Radsatz 18 sitzt auf einer Hohlwelle 43, welche die Zapfwelle 6 umgibt. Von der Hohlwelle 43 erfolgt der Antrieb der Fahrzeugräder über ein umschaltbares Planetengetriebe 44, dessen Abtriebsrad 45 auf einer Antriebswelle 46 sitzt, die mit einem Vorder- und Hinterradantrieb in Verbindung stehen kann, wie in Figur 1 schematisch angedeutet ist. Ein auf der Welle 43 sitzendes Sonnenrad 47 des Planetengetriebes kämmt mit Planetenrädern 48, welche auf dem Abtriebsrad 49 gelagert sind, welches mit dem Abtriebsrad 45 kämmt. Die Planetenräder 48 kämmen mit einem äusseren Zahnkranz 50, welcher wahlweise über eine eingerückte Kupplung 51 (Figur 1 oben) mit der Welle 43 oder bei ausgerückter Kupplung 51 mit einem festen Teil 52 gekuppelt werden kann. Im ersten Falle läuft das ganze Planetengetriebe mit der Geschwindigkeit der Welle 43 um, und es erfolgt ein verhältnismässig schneller, direkter Antrieb auf die Welle 46. Ist der Zahnkranz 50 mit dem festen Teil 52 gekuppelt, arbeitet das Planetengetriebe als solches und überträgt die Drehung der Welle 43 mit erheblicher Untersetzung an die Welle 46.

Es ist ein weiteres Planetengetriebe 53 vorgesehen, dessen Sonnenrad 54 auf einer, die Welle 43 umgebenden Hohlwelle 55 sitzt, auf welcher auch die Scheibe 42 und die ihr zugeordnete andere Scheibe des stufenlosen Zahnriemengetriebes sitzen. Auf der Welle 43 sitzt ein Kupplungsstück 57 längsverschiebbar, aber unverdrehbar, das wahlweise entweder mit der Hohlwelle 55 (Stellung in Figur 1 oben) oder mit dem Gestell 58 des Planetengetriebes 53 (Stellung in Figur 1 unten) in Eingriff gebracht werden kann. Es ist damit möglich, die Hohlwelle 55 wahlweise direkt oder über die starke Untersetzung des Planetengetriebes 53 mit der Hohlwelle 55 zu kuppeln.

Die Arbeitsweise und Bedienung des Getriebes ergibt sich weitgehend aus der Darstellung und vorstehenden Beschreibung. Bei der dargestellten normalen Stellung des Getriebes erfolgt der Kraftfluss von der Motorwelle 1, die Kupplung 2, die Welle 3, die Schaltwelle 8, die Räder 12 und 13, das Kardangelenk 14, die Hilfswelle 15, die Vorgelegewelle 21, die Räder 22, 23, 25 und den Radsatz 18, die Welle 43 und das Planetengetriebe 44 an die Antriebswelle 46 für die Räder des Fahrzeugs. Durch Umschalten des Planetengetriebes 44 in der beschriebenen Weise können wahlweise schnelle und langsame Gänge eingeschaltet werden. Für jeden Bereich stehen sieben Gänge entsprechend den sieben Rädern 18′ des Radsatzes 18 zur Verfügung. Normalerweise ist die Welle 55 mit der Welle 43 gekuppelt und das Uebersetzungsverhältnis des stufenlosen Zahnriemengetriebes entspricht genau dem Uebersetzungsverhältnis zwischen der Vorgelegewelle 21 und dem Radsatz 18. Zum Schalten in einen anderen Gang wird der neue Gang vorgewählt worauf beim Ausrücken der Kupplung 2 der Schaltvorgang automatisch ausgelöst wird. Hierbei wird zuerst der Zylinder 33 betätigt, welcher die Kniehebel 28, 29 einknickt und damit eine Verschwenkung des Gestelles 26 und seine Achse 24 nach aussen bewirkt. Damit wird das Zahnrad 25 aus dem Zahnrad 18′ des Radsatzes 18 ausgerückt. Es erfolgt nun die Entriegelung des Gestells 26 durch Ausrücken durch Verschwenken des bisher wirksamen Anschlagnockens 36 der Anschlagwelle 37 aus der Gabel 35. Das Gestell 26 mit den Rädern 22, 23 und 25 wird nun längs der Vorgelegewelle 21 mittels des Zylinders 34 in die neue Schaltstellung verschoben, wo die Gabel 35 in den neu in wirksame Stellung verschwenkten Nocken der Anschlagwelle 37 einklinkt und damit die Stellung des Gestells genau bestimmt. Diese Verschiebung des Gestells 26 ist über das Gestänge 40 auf das stufenlose Zahnriemengetriebe übertragen worden, womit das Uebersetzungsverhältnis desselben der Uebersetzung der neuen gewählten Schaltstufe entsprechend verändert worden ist. Die Vorgelegewelle 21 und die Räder 22, 23 und 25 werden also nun über das stufenlose Getriebe mit synchronisierter Drehzahl angetrieben. Es kann nun das Wiedereinrücken des Zahnrades 25 in eines der Zahnräder 18′ des Radsatzes 18 erfolgen. Nach diesem Vorgang wird schliesslich auch die Kupplung 2 wieder eingerückt, womit der Kraftfluss vom Motor über das Getriebe zu den Triebrädern wieder hergestellt ist.

Wie bereits erwähnt, kann unter Ausschaltung des eigentlichen Schaltgetriebes ein Direktgang gewählt werden, wenn der Schalthebel in die Stellung D gebracht wird, in welchem Falle die Schaltwelle 8 direkt mit dem Radsatz 18 und über denselben mit der Welle 43 gekuppelt ist. In dieser Stellung ist das Reversiergetriebe ausgeschaltet und es kann vorzugsweise durch Steuerung des Zylinders 33 auch das Rad 25 aus dem Radsatz 18 ausgekuppelt sein. Ferner könnte in diesem Falle eine dritte Stellung des Kupplungsteils 57 vorgesehen sein, für welche die Wellen 43 und 55 voneinander entkuppelt sind und demzufolge auch das stufenlose Getriebe ausgeschaltet ist. Es würden somit alle Hilfsteile des Getriebes stillstehen, und es würde nur ein direkter Antrieb von der Motorwelle zur Welle 43 erfolgen.

Anderseits kann der Schalthebel in die Nullstellung gebracht werden, und durch nichtdargestellte Mittel kann die Zapfwelle 6 verschoben und damit entweder direkt mit der Motorwelle 1 oder aber über die Kupplung 2 mit der Welle 3 in Eingriff gebracht werden. Es kann in diesem Falle bei völlig stillstehendem Getriebe ein direkter Antrieb der Zapfwelle erfolgen, ohne dass irgendwelche Getrieberäder in Bewegung wären.

Das Planetengetriebe 53 gestattet die Einschaltung eines Kriechganges mit stufenloser Geschwindigkeitsregelung. In dieser Stellung wird das Zahnrad 25 mittels des Zylinders 33 ausgerückt, und der Antrieb erfolgt nun über die Vorgelegwelle 21, das stufenlose Getriebe, die Welle 55, das Planetengetriebe 53 und das Kupplungsstück 57 auf die Welle 43, welche ihrerseits über das auf Langsamgang geschaltete Planetengetriebe 44, die Triebräder des Fahrzeugs, antreibt. Es können hierbei sehr niedrige Fahrgeschwindigkeiten fein eingestellt werden. Die Einstellung des stufenlosen Getriebes kann hierbei entweder mittels der Schaltbewegungen des Zylinders 34 über das Gestänge 40 oder über ein besonderes Steuergestänge für das stufenlose Getriebe erfolgen.

Es sind verschiedene Ausführungsvarianten möglich. Das eine oder andere der Planetengetriebe 44 und 53 kann wegfallen oder kann durch ein anderes Getriebe ersetzt werden. Es kann eine hydraulische Kupplung vorgesehen sein. Das Hauptgetriebe kann mehr oder meniger als sieben Schaltstufen aufweisen. Das Hauptgetriebe ist, wie bereits erwähnt, einfach in der Bedienung, im Aufbau und in der Arbeitsweise. Es ist ein Schalthebel vorzusehen, der nur in einer Ebene in vier Stellungen zu bringen ist. Die Schaltstellungen können gesondert vorgewählt werden, und die Umschaltung der Planetengetriebe 44 und 53 kann auch separat erfolgen. Desgleichen kann eine eventuelle besondere Steuerung des stufenlosen Getriebes an einem besonderen Bedienungselement erfolgen. Die Vorgelegewelle 21 sowie die Kardanwelle 38 werden vorzugsweise horizontal neben der Hauptachse des Getriebes angeordnet, was einen niedrigen horizontalen Aufbau des Getriebes ergibt. Ein solches Getriebe kann leicht zugänglich gemacht werden, so dass es auch besonders günstig hinsichtlich Wartung ist.

Zusammenfassend seien weitere Vorteile erwähnt, die sich aus der beschriebenen Getriebekonstruktion ergeben.

Die Einfachheit der Herstellung ergibt sich vorwiegend aus der Massgleichheit der teuersten Teile, insbesondere des Radsatzes 18 für eine vollständige Typenreihe. Die Abstufung der Räder ist beispielsweise so gewählt, dass sich ein Oeffnungswin kel von 18° ergibt. Auch bei abgestufter Länge der Radsätze ergibt sich somit eine einheitliche Bearbeitung pro Teiltyp über die ganze Typenreihe mit weitgehend gleicher Rüstzeitprogrammierung, demselben Werkzeugsatz und derselben Ausspannvorrichtung. Zugleich ergeben sich einheitliche Achsdistanzen, usw., was auch die Herstellung der Gehäuseteile des Getriebes erleichtert.

Bei der dargestellten Ausführung bildet das Planetengetriebe 44, bzw. ein entsprechendes Umschaltgetriebe zusammen mit dem direkten Abtrieb nach hinten und vorne eine Einheit, und es ist keine Rückführung in das eigentliche Schaltgetriebe nötig. Auch hier können die Achsdistanzen für eine gesamte Reihe einheitlich gehalten werden.

Die direkte Durchführung der Zapfwelle 6 und die Möglichkeit der vollständigen Stillegung des übrigen Getriebes erlaubt einen besonders wirtschaftlichen Betrieb.

Durch die Anordnung des Reversiergetriebes am Eingang können alle möglichen Uebersetzungsverhältnisse für Vorwärts- und Rückwärtsfahrt ausgenützt werden.

Der vollautomatische Schaltvorgang schliesst Falschbedienungen aus. Der Vorgang kann sehr schnell erfolgen, da eine kraftschlüssige Zwangssynchronisierung vorliegt, was schliesslich einen weitgehend unterbruchlosen Kraftfluss, d. h. besonders kurze Schaltzeiten erlaubt.

Um eine möglichst gleichförmige Bewegungsübertragung während des normalen Betriebs zu erzielen, kann die Hilfswelle 15 so angeordnet werden, dass sie im normalen Betriebszustand nach Fig. 1 zur Hauptgetriebeachse radial und somit genau in der Verlängerung der Welle des Kegelrades 13 steht. Die Kegelräder 19 und 20 müssen in diesem Falle einen entsprechend grösseren Winkel als 90° einschliessen. Diese Lösung setzt überdies voraus, dass das Zahnrad 20 axial verschiebbar auf der Vorgelegewelle 21 sitzt, aber der Vorteil liegt darin, dass jede Ungleichförmigkeit der Bewegungsübertragung in normalen Betriebszustand durch das Kardangelenk 14 ausgeschlossen wird. Die Hilfswelle 15 verlässt ihre radiale Lage nur während des Schaltvorgangs.

**Ansprüche**

1. Schaltgetriebe an einem Nutzfahrzeug, insbesondere Traktor mit einem starren Satz (18) von Zahnrädern (18') mit abgestuftem Durchmesser, in welche Zahnräder (18') ein über eine Vorgelegewelle (21) antreibbares Vorgelegerad (25) wahlweise einrückbar ist, dadurch gekennzeichnet, dass parallel zu dem die Vorgelegewelle (21) und den Satz (18) von Zahnrädern (18') umfassenden Schaltgetriebe ein stufenlos verstellbares Getriebe (41, 42) als Synchronisationsgetriebe angeordnet ist, das über Steuermittel (40) der Schaltstellung des Vorgelegerades (25) entsprechend eingestellt ist.

2. Getriebe nach Anspruch 1, dadurch gekennzeichnet, das als Steuermittel ein Gestänge (40) vorgesehen ist.

3. Getriebe nach Anspruch 1 oder 2, dadurch gekennzeichnet, dass der Satz (18) von Zahnrädern (18') auf einer Hohlwelle (43) sitzt, die von einer Zentralwelle (6) durchsetzt ist.

4. Getriebe nach Anspruch 3, dadurch gekennzeichnet, dass die Zentralwelle (6) direkt mit dem Motor des Nutzfahrzeuges kuppelbar ist.

5. Getriebe nach irgendeinem der Ansprüche 1-4, dadurch gekennzeichnet, dass der Schaltvorgang des Vorgelegerades (25) vollautomatisch gemäss einer Vorwahl der Schaltstellung steuerbar ist.

6. Getriebe nach irgendeinem der Ansprüche 1-5, dadurch gekennzeichnet, dass der Vorgelegewelle (21) ein Reversiergetriebe (12, 13, 17) vorgeschaltet ist.

7. Getriebe nach irgendeinem der Ansprüche 1-6, dadurch gekennzeichnet, dass die Vorgelegewelle (21) und die Achse des Satzes (18) von Zahnrädern (18') mindestens annähernd in einer Horizontalebene liegen.

8. Getriebe nach Anspruch 2, dadurch gekennzeichnet, dass das stufenlose Getriebe (41, 42) mit der Welle (43) des Satzes (18) von Zahnrädern (18') wahlweise direkt oder über ein Reduktionsgetriebe (53), z. B. Planetengetriebe kuppelbar ist.

9. Getriebe nach irgendeinem der Ansprüche 1-8, dadurch gekennzeichnet, dass der Radantrieb (46) des Fahrzeuges wahlweise direkt vom Satz (18) von Zahnrädern (18') oder über ein Reduktionsgetriebe (44), z. B. Planetengetriebe, erfolgt.

10. Getriebe nach irgendeinem der Ansprüche 1-9, gekennzeichnet durch Mittel (35-37) zur mechanischen Verriegelung des Vorgelegerades (25) in jeder seiner Schaltstellungen.

## Claims

1. Gear change transmission for a commercial vehicle, particularly a tractor, with a rigid set (18) of toothed wheels (18') with stepped diameter, into which toothed wheels (18') an intermediate toothed wheel (25) adapted to be driven through an intermediate shaft (21) may selectively be engaged, characterized in that an infinitely variable gear (41, 42) is disposed as a synchronizing gear in parallel to the gear change transmission comprising the intermediate shaft (21) and the set (18) of toothed wheels (18'), this synchronizing gear being adjusted in accordance with the position of the intermediate toothed wheel (25) through control means (40).

2. Gear according to claim 1, characterized in that a rod mechanism (40) is provided as a control means.

3. Gear according to claim 1 or 2, characterized in that the set (18) of toothed wheels (18') is fixed on a hollow shaft (43) which is traversed by a central shaft (6).

4. Gear according to claim 3, characterized in that the central shaft (6) may directly be coupled to the motor of the commercial vehicle.

5. Gear according to any one of claims 1-4, characterized in that the changing operation of the intermediate wheel (25) may be automatically controlled in accordance with a preselection of the gear position.

6. Gear according to any one of claims 1-5, characterized in that a reversing gear (12, 13, 17) is connected in front of the intermediate shaft (21).

7. Gear according to any one of claims 1-6, characterized in that the intermediate shaft (21) and the axis of the set (18) of toothed wheels (18') are situated at least approximately in a horizontal plane.

8. Gear according to claim 2, characterized in that the infinitely variable gear (41, 42) may be coupled to the shaft (43) of the set (18) of toothed wheels (18') selectively directly or through a reduction gear (53), for instance a planetary gear.

9. Gear according to any one of claims 1-8, characterized in that the wheel drive (46) of the vehicle is effected selectively directly from the set (18) of toothed wheels (18') or through a reduction gear (44), for instance a planetary gear.

10. Gear according to any one of claims 1-9, characterized by means (35-37) for mechanical locking of the intermediate wheel (25) in each of its gear positions.

## Revendications

1. Boîte de vitesse pour un véhicule utilitaire, plus particulièrement un tracteur, avec un jeu rigide (18) d'engrenages (18') avec diamètre en étages, dans lesquels engrenages (18') un engrenage intermédiaire (25) susceptible d'être entraîné par un arbre intermédiaire (21) peut être sélectivement engagé, caractérisée en ce qu'une transmission à réglage continu (41, 42), comme transmission de synchronisation, est disposée en parallèle sur la boîte de vitesse comprenant l'arbre intermédiaire (21) et le jeu (18) d'engrenages (18'), cette transmission de synchronisation étant ajustée selon la position de l'engrenage intermédiaire (25) par des moyens de commande (40).

2. Boîte de vitesse selon la revendication 1, caractérisée en ce qu'une tringlerie (40) est prévue comme moyen de commande.

3. Boîte de vitesse selon la revendication 1 ou 2, caractérisée en ce que le jeu (18) d'engrenages (18') est fixé sur un arbre creux (43) traversé par un arbre central (6).

4. Boîte de vitesse selon la revendication 3, caractérisée en ce que l'arbre central (6) peut être directement couplé avec le moteur du véhicule utilitaire.

5. Boîte de vitesse selon l'une quelconque des revendications 1-4, caractérisée en ce que l'opération de changement de l'engrenage intermédiaire (25) peut être commandée automatiquement selon une présélection de la position de changement.

6. Boîte de vitesse selon l'une quelconque des revendications 1-5, caractérisée en ce qu'une transmission réversible (12, 13, 17) est disposée devant l'arbre intermédiaire (21).

7. Boîte de vitesse selon l'une quelconque des revendications 1-6, caractérisée en ce que l'arbre intermédiaire (21) et l'axe du jeu (18) d'engrenages (18') sont situés approximativement dans un plan horizontal.

8. Boîte de vitesse selon la revendication 2, caractérisée en ce que la transmission à réglage continu (41, 42) peut être couplée avec l'arbre (43) du jeu (18) d'engrenages (18') sélectivement directement ou par un engrenage réducteur (53), par exemple un engrenage planétaire.

9. Boîte de vitesse selon l'une quelconque des revendications 1-8, caractérisée en ce que l'entraînement (46) du véhicule est effectué sélectivement directement à partir du jeu (18) d'engrenages (18') ou par un engrenage réducteur (44), par exemple un engrenage planétaire.

10. Boîte de vitesse selon l'une quelconque des revendications 1-9, caractérisée par des moyens (35, 37) pour verrouiller mécaniquement l'arbre intermédiaire (25) à chacune de ses positions de couplage.

FIG.1

0 041 925

# FIG.2

# FIG.3